# EUROPEAN PATENT APPLICATION

(11) **EP 4 543 116 A1**
(43) Date of publication of application: **23.04.2025**
(21) Application number: 23823188.0
(22) Date of filing: 14.06.2023
(51) Int. Cl.: H04W 72/04

(54) **METHOD EXECUTED BY USER EQUIPMENT, AND USER EQUIPMENT AND INFORMATION REPORTING METHOD**

(30) Priority: 17.06.2022 CN 202210695306
(71) Applicant: Sharp Kabushiki Kaisha, Sakai City, Osaka 590-8522 (JP)
(72) Inventor: CHANG, Ningjuan, Pudong, Shanghai 201206 (CN); LIU, Renmao, Pudong, Shanghai 201206 (CN)
(74) Representative: Müller Hoffmann & Partner
(86) International application number: PCT/CN2023/100184
(87) International publication number: WO 2023/241622

(57) **Abstract**

The present disclosure provides a method performed by user equipment, user equipment, and an information reporting method. The method performed by user equipment (UE) includes: the UE receiving a radio resource control (RRC) message comprising a primary secondary cell group cell (PSCell) change command; the UE performing an RRC reconfiguration procedure for a PSCell change, and performing a PSCell change report (SPCR) determination operation; and the UE determining whether the PSCell change procedure is accompanied by a primary cell (PCell) change, and releasing an SPCR configuration on the basis of a determination result.

## Description

### TECHNICAL FIELD

The present disclosure relates to the technical field of wireless communications. More specifically, the present disclosure relates to a method for reporting information related to a primary secondary cell group cell in the case of dual connectivity, a method performed by user equipment, and user equipment.

### BACKGROUND ART

At the 3rd Generation Partnership Project (3GPP) RAN#94e plenary meeting held in December 2021, a new study item on Release 18 technology standards was approved (see Non-Patent Document: RP-213553: New WID on further enhancement of data collection for Self-Organising Networks (SON)/Minimization of Drive Tests (MDT) in NR and EN-DC). The research objective of this item is to further enhance a network data collection procedure in an NR system based on Release 17 so as to better achieve the objective of a self-organization, self-optimization network and minimization of drive tests. One of the specific technologies studied is to implement information reporting in a scenario in which a primary secondary cell group cell (PSCell) is successfully changed.

The present disclosure provides a solution to the problem of how to implement PSCell information reporting in an NR system.

### SUMMARY OF THE INVENTION

The objective of embodiments of the present disclosure is to provide a solution to the problem of how to implement PSCell information reporting in an NR system. More specifically, the present disclosure provides a solution to the problem of how to record PSCell change information after a PSCell change procedure is successfully performed when UE is configured with dual connectivity (DC) in an NR system. The embodiments of the present disclosure provide a method performed by user equipment, corresponding user equipment, and an information reporting method.

According to a first aspect of the present disclosure, provided is a method performed by user equipment (UE), comprising: the UE receiving a radio resource control (RRC) message comprising a primary secondary cell group cell (PSCell) change command; the UE performing an RRC reconfiguration procedure for a PSCell change, and performing a PSCell change report (SPCR) determination operation; and the UE determining whether the PSCell change procedure is accompanied by a primary cell (PCell) change, and releasing an SPCR configuration on the basis of a determination result.

In the method performed by user equipment (UE) according to the first aspect, preferably, the SPCR configuration may comprise: a first SPCR configuration configured by a master node (MN) and a second SPCR configuration configured by a secondary node (SN).

In the method performed by user equipment (UE) according to the first aspect, preferably, if the UE determines that the PSCell change procedure is accompanied by a PCell change, the first SPCR configuration and the second SPCR configuration are released, and if the UE determines that the PSCell change procedure is not accompanied by a PCell change, the second SPCR configuration is released.

In the method performed by user equipment (UE) according to the first aspect, preferably, the RRC message is received via SRB1, the UE receives the first SPCR configuration from an otherconfig information element or a secondaryCellGroup information element in the RRC message on SRB1, and the UE receives the second SPCR configuration from an mrdc-SecondaryCellGroupConfig information element in the RRC message on SRB1.

In the method performed by user equipment (UE) according to the first aspect, preferably, upon determining that the PSCell change is successfully completed, the UE performs the SPCR determination operation.

In the method performed by user equipment (UE) according to the first aspect, preferably, if the RRC message comprising a reconfiguration with sync information element for an SCG also comprises a reconfiguration with sync information element for an MCG, the UE determines that the PSCell change procedure is accompanied by a PCell change.

In the method performed by user equipment (UE) according to the first aspect, preferably, if the RRC message comprises an inner RRC message and an outer RRC message, the part of the RRC message for the reconfiguration with sync information element for an SCG is the outer RRC message.

According to a second aspect of the present disclosure, provided is a user equipment, comprising: a processor; and a memory having instructions stored thereon, wherein the instructions, when run by the processor, perform the method performed by user equipment described herein.

According to a third aspect of the present disclosure, provided is an information reporting method, comprising: a master node (MN) or a secondary node (SN) transmitting a PSCell change report (SPCR) configuration to user equipment (UE) in dual connectivity; if the MN is to transmit the SPCR configuration to the UE, the SN including an SPCR configuration proposal in an inter-node RRC message and transmitting the same to the MN, and the MN determining the SPCR configuration on the basis of the SPCR configuration proposal of the SN in combination with an SPCR configuration requirement of the MN; and if the SN is to transmit the SPCR configuration to the UE, the MN including an SPCR configuration proposal in an inter-node RRC message and transmitting the same to the SN, and the SN determining the SPCR configuration on the basis of the SPCR configuration proposal of the MN in combination with an SPCR configuration requirement of the SN.

### BRIEF DESCRIPTION OF THE DRAWINGS

In order to understand the present disclosure and advantages thereof more fully, reference will now be made to the following description made in conjunction with the accompanying drawings.
FIG. 1 is a flowchart showing a method performed by user equipment (UE) according to Embodiment 2.
FIG. 2 is a block diagram showing user equipment (UE) according to the present disclosure.

In the drawings, identical or similar structures are marked by identical or similar reference numerals.

### DETAILED DESCRIPTION OF PREFERRED EMBODIMENTS

According to the following detailed description of exemplary embodiments of the present disclosure made in conjunction with the accompanying drawings, other aspects, advantages, and prominent features of the present disclosure will become apparent to those skilled in the art.

In the present disclosure, the terms "include" and "comprise" and derivatives thereof mean inclusion and not limitation. The term "or" has an inclusive meaning and means "and/or".

In the present specification, the following various embodiments for describing the principles of the present disclosure are merely illustrative, and should not be interpreted in any way as limiting the scope of the disclosure. The following description with reference to the accompanying drawings is used to facilitate full understanding of the exemplary embodiments of the present disclosure defined by the claims and equivalents thereof. The following description includes a variety of specific details to facilitate understanding, but these details should be considered merely exemplary. Therefore, those of ordinary skill in the art should recognize that various changes and modifications may be made to the embodiments described herein without departing from the scope and spirit of the present disclosure. In addition, the description of the known function and structure is omitted for clarity and simplicity. In addition, the same reference numerals are used for similar functions and operations throughout the accompanying drawings.

A plurality of embodiments according to the present disclosure are specifically described below by using a Long Term Evolution (LTE)/NR mobile communication system and subsequent evolved versions thereof as an exemplary application environment. However, it is to be noted that the present disclosure is not limited to the following embodiments, but is applicable to other wireless communications systems. If not otherwise specified, the concept of a cell and the concept of a base station are interchangeable in the present disclosure. An LTE system may also refer to a 5G LTE system and a post-5G LTE system (such as an LTE system referred to as an eLTE system or an LTE system that can be connected to a 5G core network). In addition, the LTE can be replaced with an evolved universal terrestrial radio access (E-UTRA) or an evolved universal terrestrial radio access network (E-UTRAN). In the present disclosure, a PSCell change refers to a primary secondary cell group cell change initiated by a network side, the change including an inter-cell primary secondary cell group cell change and an intra-cell primary secondary cell group cell change. That is, a PSCell of a UE is changed from a source PSCell to a target PSCell, wherein the source PSCell and the target PSCell may be the same cell or different cells. In this procedure, a security key or a security algorithm for access stratum security may or may not be updated accordingly. The security includes encryption and decryption and integrity protection. The source PSCell may also be referred to as a source secondary node, a source secondary cell group (SCG), a source beam, a source transmission point (TRP), or a source cell. The target PSCell may also be referred to as a target secondary node, a target beam, a target transmission point, a target secondary cell group (SCG), or a target cell. The PSCell change command described in the present disclosure is used to trigger the UE to perform a PSCell change. In an NR system, the PSCell change command is an RRC reconfiguration message including a reconfiguration with sync (Reconfigurationwithsync) information element, or rather, the PSCell change command is an RRC reconfiguration message including a reconfiguration with sync (Reconfigurationwithsync) information element for an SCG. At which time, the PSCell change may also be referred to as a reconfiguration with sync for an SCG or a reconfiguration with sync for a PSCell. The reconfiguration with sync information element may include configuration information of the target cell, for example, a target cell identifier, a target cell frequency, common configurations of the target cell such as system information, a random access configuration used by the UE to access the target cell, a security parameter configuration of the UE in the target cell, a radio bearer configuration of the UE in the target cell, a configuration of a timer T304, and the like. For ease of description, in the present disclosure, a cell change command is equivalent to an RRC message including a cell change command, and refers to an RRC message or a configuration in an RRC message that triggers a UE to perform a cell change. A cell change configuration refers to all of or part of configurations in the cell change command. "Cancel", "release", "delete", "clear", and "remove" are interchangeable. "Execute", "use", and "apply" are interchangeable. "Configure" and "reconfigure" are interchangeable. "Monitor" and "detect" are interchangeable. A cell change refers to a PSCell change, if not otherwise specified.

The following describes processes or concepts in the prior art to which the present disclosure relates.

### Cell change configuration in NR system:

In an NR system, an RRC reconfiguration message for a cell change command carries RRC configurations from a target base station, including but not limited to the following RRC configurations (see Section 6.2.2 of 3GPP Technical Standard Protocol 38.331 for details):
- A measurement configuration: used to configure intra-frequency, inter-frequency, and inter-radio access technology measurements performed by UE, for example, a measurement object configuration, a measurement report configuration, a measurement gap configuration, etc.
- A cell group configuration (a cellGroupConfig information element), used to configure a secondary cell group, including a Radio Link Control (RLC) bearer configuration (an rlc-bearerToAddModList information element and an rlc-bearerToreleaselist information element), a Medium Access Control (MAC) configuration (a MAC-cellgroupconfig information element), a physical layer configuration, a secondary cell addition/modification/release configuration, a special cell (SpCell) configuration, etc. corresponding to a data radio bearer/signaling radio bearer. The SpCell configuration includes a cell index number, cell change information (a reconfigurationWithSync information element), a radio link failure-related timer and constant configuration, a Radio Link Monitoring (RLM) configuration, a special cell dedicated configuration, etc. The reconfigurationwithsync information element includes cell change related information such as serving cell configuration common information, a cell radio network temporary identifier (C-RNTI) of the UE in the target cell, configurations of a cell change procedure monitoring timer T304, a random access dedicated configuration for a random access procedure to the target cell, etc.
- A radio bearer configuration (a radiobearerConfig information element), used to configure a Service Data Application Protocol (SDAP) layer and a Packet Data Convergence Protocol (PDCP) layer of a Data Radio Bearer (DRB) and/or a Signaling Radio Bearer (SRB).
- A key update configuration.

### Dual connectivity (DC):

In order to improve the data transmission efficiency of the UE, the UE simultaneously establishes links with two base stations. That is, radio resources used by the UE are provided by different schedulers located in the two base stations. Radio access between the two base stations and the UE may be the same or different Radio Access Technology (RAT). For example, both are NR, or one is NR, and one is LTE, also referred to as evolved universal terrestrial radio access (E-UTRA). In these two base stations, one is referred to as a master node (MN) or an MgNB or an MeNB. A serving cell group under the master node is referred to as a master cell group (MCG). The other is referred to as a secondary node (SN) or an SgNB or an SeNB, and a serving cell group under the secondary node is referred to as a secondary cell group (SCG). When the master node is LTE and the secondary node is NR, DC is referred to as EN-DC (using a 4G core network) or NGEN-DC (using a 5G core network). When the master node and the secondary node are both NR, DC is referred to as NR-DC. An MCG includes one primary cell (PCell) and one or more optional secondary cells (SCells). The PCell operates on a primary frequency, and the UE performs an initial connection setup procedure or a connection re-establishment procedure by means of the primary frequency. An SCG includes one primary SCG cell (PSCell) and one or more optional SCells. The PSCell refers to an SCG cell that performs random access when the UE performs a reconfiguration with sync procedure for an SCG. The PCell and the PSCell are also collectively referred to as special cells (SpCells). When DC is configured, a DRB and an SRB for the UE are supported to be configured to be a split bearer. When not configured to be a split SRB, SRB1 and SRB2 are transmitted by means of an MCG path. Furthermore, when the DC is configured, SRB3 may also be set up for the SN to transmit configurations associated with the SCG between the SN and the UE, etc. Setup and release of SRB3 are both determined by the SN.

### PSCell change procedure in NR system:

A PSCell change may be initiated by an MN or an SN. The MN or the SN may initiate a PSCell change on the basis of a factor such as a measurement result of a source PSCell or a neighboring cell reported by a UE, or the load of a neighboring cell, or the like. In a PSCell change procedure in which the MN participates (no matter whether the PSCell change procedure is initiated by the MN or the SN), a cell change command for a PSCell is included in an RRC reconfiguration message of SRB1 and transmitted to the UE. A PSCell change command is an RRC reconfiguration message for an SCG. When the PSCell change command is transmitted to the UE by means of an MCG link, the PSCell change command is typically included in an mrdc-SecondaryCellGroupConfig information element or an nr-SecondaryCellGroupConfig information element, and is inserted in an RRC reconfiguration message of SRB 1. If the PSCell change does not need participation of the MN, e.g., an intra-SN PSCell change scenario, then the SN may autonomously generate an RRC reconfiguration message of the PSCell change command, and transmit the same to the UE by means of SRB3 of an SCG link.

The UE receiving the PSCell change command applies immediately a configuration of the cell change command to perform a PSCell change, including a random access procedure to the PSCell. The UE monitors the cell change procedure by means of a timer T304. When the cell change procedure is initiated, the UE starts the T304 timer. When the cell change procedure is completed (the random access procedure is successfully completed), the UE stops the timer T304. When T304 expires, the UE considers that the PSCell change fails or reconfiguration with sync fails.

### Successful handover report:

Handover information reporting when a successful handover is introduced in an NR system of Release 17. Said handover refers to a PCell change or a reconfiguration with sync of a PCell. A handover command refers to an RRC reconfiguration message including a reconfiguration with sync information element for an MCG. The handover information reporting for a successful handover is also referred to as a successful handover report (SHR) for short. This is because, in an NR system, performing network optimization by relying only on the radio link failure (RLF) report in existing mechanisms may cause data acquisition processes to become lengthened, and handover information reporting, when a handover succeeds, enables the network side to acquire a sufficient number of samples in a mobility procedure more quickly. Second, even for a successful handover scenario, a mobility parameter thereof also needs to be further optimized. Content of an SHR may include one or more of the following: a source cell identity of a handover; a target cell identity of the handover; a measurement result of a source cell or a target cell of the handover; a measurement result of a neighbor cell; and an indication indicating a reason that the SHR is triggered (i.e. which triggering condition is satisfied), etc. Success of the handover includes successful transmission of an RRC reconfiguration complete message for responding to a handover command RRC reconfiguration message with respect to the target base station, or successful completion of a random access procedure to the target base station at a MAC layer. The network side needs to configure, for the UE, a triggering condition (e.g., thresholds corresponding to T310, T312, and T304) of the successful handover report. The UE records handover information of the successful handover only when the configured one or more triggering conditions are satisfied (for example, when the ratio of an elapsed value of T310 (or T312) of the source cell to a configured value of T310 (or T312) exceeds a configured corresponding threshold at the time of receiving the handover command, and when the ratio of an elapsed value of T304 to a configured value of T304 exceeds a configured corresponding threshold at the time of successful handover completion). The triggering conditions related to the source cell, e.g., the T310 threshold or the T312 threshold, are configured for the UE by the source cell, and the triggering conditions related to the target cell, e.g., the T304 threshold, are configured for the UE by the target cell. The configurations of these successful handover report triggering conditions are included in a successful handover report configuration (e.g., a successHO-config information element). The UE may inform, by using an RRC message, the network side that an available successful handover report (for example, indicated by a successHO-InfoAvailable information element) is present thereon. After receiving the indication, the network side may request, by using an RRC message (for example, indicated by successHO-ReportReq in a UEInformationRequest message), the UE to report the successful handover information report stored thereby. The UE reports the stored successful handover information report (successHO-Report in the UEInformationResponse message) to the network side in a response RRC message. The successful handover report stored on the UE may be stored for up to 48 hours.

As described above, the SHR mechanism when the PCell handover is standardized in the NR system of Release 17 to further optimize mobility robustness in the handover scenario. However, a study objective in Release 18 is to introduce a PSCell change report (successful PSCell change report, SPCR) in a PSCell change scenario. Information of a successful PSCell change procedure is reported to the network side, so that the network side can optimize and adjust a parameter of the PSCell change, so as to improve mobility robustness of the PSCell. In the present disclosure, it is assumed that a reporting procedure of the SPCR is similar to that of the SHR. That is, if UE that has successfully performed a PSCell change procedure determines that an SPCR needs to be generated, the UE stores, in a corresponding UE variable, content of the generated SPCR, and indicates, to the network side by means of an RRC message, that the stored SPCR is present thereon. Upon receiving a request from the network side for instructing the UE to report the SPCR, the UE includes the stored SPCR in an RRC message and reports the same to the network side. Different from the handover scenario, in the PSCell change scenario, in addition to the participation of the source PSCell and the target PSCell, in an SN modification procedure triggered by the MN or an SN change procedure triggered by the MN, the MN also participates in the procedure in addition to the participation of the source PSCell and the target PSCell. How to implement or manage an SPCR configuration in a PSCell change procedure in which the MN participates becomes a matter of concern in the present disclosure. Further, when considering the issue of mobility robustness optimization of the PSCell with the MN participating therein, whether the SPCR configuration is determined by the MN or the SN and whether to release, in the PSCell change procedure, the SPCR configuration configured by the MN or SN are matters of concern in the present disclosure. The method in the present disclosure is applicable to the case of PSCell addition. That is, the PSCell change may also be a PSCell addition. Alternatively, the method in the present disclosure is applicable to the case of conditional PSCell addition/change (CPAC), also referred to as conditional reconfiguration for the SCG.

The following embodiments provide a solution to the above problems. If not otherwise specified, the embodiments are not mutually exclusive, and may be combined, or some concepts or definitions are commonly applicable among the embodiments.

### Embodiment 1

Provided in the embodiment is an SPCR configuration method performed on UE, an SN, and an MN. In the method described in the embodiment, when both the MN and the SN can trigger a PSCell change procedure, both the MN and the SN can enable the SPCR and configure an SPCR related configuration for the UE.

In a first SPCR configuration implementation, each of the MN and the SN can separately configure the SPCR configuration of the UE. That is, the SPCR configuration received by the UE from the network side may be only the SPCR configuration determined by the MN and configured for the UE, may be only the SPCR configuration determined by the SN and configured for the UE, or may include both the SPCR configuration determined by the MN and configured for the UE and the SPCR configuration determined by the SN and configured for the UE. Such a configuration manner enables the different nodes MN or SN on the network side to have respective flexibilities for the SPCR configuration, thereby reducing signaling overhead caused by negotiation of the SPCR configuration between the MN and the SN. For example, the MN and the SN may configure, for the UE, different SPCR configurations (e.g., different T310 thresholds (a T310 threshold configured by the MN and another different T310 threshold configured by the SN)), and preferably, the UE receives the SPCR configuration determined and configured by the MN from an RRC message (e.g., an RRC reconfiguration message) on SRB1. Further, the UE receives the SPCR configuration determined and configured by the MN from an otherconfig information element or a secondaryCellGroup information element in the RRC message on SRB1, and preferably, the RRC reconfiguration message in this case refers to an RRC reconfiguration message not included in an mrdc-SecondaryCellGroupConfig information element. The UE receives the SPCR configuration determined and configured by the SN from an mrdc-SecondaryCellGroupConfig information element in the RRC message (e.g., the RRC reconfiguration message) on SRB1. Further, the UE receives the SPCR configuration determined and configured by the SN from the otherconfig information element in the RRC reconfiguration message included in the mrdc-SecondaryCellGroupConfig information element. In addition, when SRB3 is configured, the UE receives the SPCR configuration determined and configured by the SN from an RRC message of SRB3.

In a second SPCR configuration implementation, the final SPCR configuration is determined by the MN and transmitted to the UE. Thus, in this implementation, the SN and the MN need to negotiate the SPCR configuration for the UE. In an SPCR configuration negotiation procedure performed by the MN and the SN, the SN may include an SPCR configuration proposed thereby in an inter-node RRC message (e.g., CG-Config) to transmit the same to the MN. The MN determines the final SPCR configuration on the basis of the SPCR configuration received thereby from the SN in combination with an SPCR configuration requirement of the MN, and transmits the same to the UE. Preferably, the UE receives the SPCR configuration determined by the MN from an RRC message (e.g., an RRC reconfiguration message) on SRB1. Further, the UE receives the SPCR configuration from an otherconfig information element or a secondaryCellGroup information element in the RRC message on SRB 1. In this implementation, when the SN decides not to configure the SPCR configuration for the UE, the above inter-node negotiation procedure will not be performed, that is, the step of including, by the SN, the SPCR configuration proposed thereby in the inter-node RRC message (e.g., CG-Config) to transmit the same to the MN is optional.

In a third SPCR configuration implementation, the final SPCR configuration is determined by the SN and transmitted to the UE. In this implementation, there is also a negotiation procedure between the SN and the MN for the SPCR configuration of the UE. In an SPCR configuration negotiation procedure performed by the MN and the SN, the MN includes an SPCR configuration proposed thereby in an inter-node RRC message (e.g., CG-ConfigInfo) to transmit the same to the SN, and then the SN generates a final SPCR configuration on this basis and transmits the final SPCR configuration to the UE. Optionally, the SN includes the SPCR configuration determined thereby in an inter-node RRC message (e.g., CG-Config) to transmit the same to the MN, and the MN forwards the same to the UE via SRB1. Preferably, the MN includes the SPCR configuration in an inner RRC reconfiguration message in the mrdc-SecondaryCellGroupConfig information element in the RRC message on SRB1 to forward the same to the UE. Optionally, when SRB3 is configured, the UE receives the SPCR configuration from an RRC message of SRB3. Otherwise, when SRB3 is not configured, the UE receives the SPCR configuration from the inner RRC reconfiguration message in the mrdc-SecondaryCellGroupConfig information element included in the RRC message on SRB1. In this implementation, when the MN decides not to configure the SPCR configuration for the UE, the above inter-node negotiation procedure will not be performed, that is, the step of including, by the MN, the SPCR configuration proposed thereby in the inter-node RRC message (e.g., CG-ConfigInfo) to transmit the same to the SN is optional.

The above mrdc-SecondaryCellGroupConfig information element is an information element including an RRC message for an SCG configuration in an NR-DC network. The secondaryCellGroup information element is an information element including an SCG configuration in an NR-DC network, that is, including a CellGroupConfig information element for the SCG.

The SPCR configuration refers to a configuration used for the UE to report successful PSCell change information to the network side. Preferably, the SPCR configuration includes the configuration of a triggering condition used for the UE to determine whether to record corresponding successful PSCell change information for a PSCell change. The triggering condition may be, for example, a T310 threshold for the PSCell, a T312 threshold for the PSCell, or a T304 threshold for the SCG. In one configuration, the threshold is a percentage threshold. For example, the T310 threshold for the PSCell indicates a percentage threshold between an elapsed value of T310 and a configured value of T310 for the PSCell. The T312 threshold for the PSCell indicates a percentage threshold between an elapsed value of T312 and a configured value of T312 for the PSCell. The T304 threshold for the SCG indicates a percentage threshold between an elapsed value of T304 and a configured value of T304 for the SCG. The UE determines, according to the SPCR configuration, whether to record related information of a certain PSCell change procedure in a UE variable corresponding to the SPCR. Therefore, in the present disclosure, the SPCR configuration is also referred to as an SPCR triggering condition. When the UE determines that one or more SPCR triggering conditions are satisfied, the UE records corresponding SPCR information in a UE variable related to the SPCR. The SPCR triggering condition being satisfied means that the UE determines that one or more configurations in the SPCR are satisfied. For example, when the triggering condition is the T310 threshold, the SPCR triggering condition being satisfied means that: before the UE performs reconfiguration with sync for the PSCell upon receiving a PSCell change command (or when execution of a PSCell change is initiated), if the ratio of an elapsed value of T310 of a source PSCell to a configured value of T310 exceeds the configured threshold, the UE considers that the SPCR triggering condition is satisfied. When the triggering condition is the T312 threshold, the SPCR triggering condition being satisfied means that: before the UE performs reconfiguration with sync for the PSCell upon receiving a PSCell change command (or when execution of a PSCell change is initiated), if the ratio of an elapsed value of T312 of a source PSCell to a configured value of T312 exceeds the configured threshold, the UE considers that the SPCR triggering condition is satisfied. When the triggering condition is the T304 threshold, the SPCR triggering condition being satisfied means that: if the ratio of an elapsed value of T304 to a configured value of T304 included in a PSCell change command exceeds the configured threshold, the UE considers that the SPCR triggering condition is satisfied.

Among the above implementations, in the first implementation, the MN and the SN are allowed to respectively configure two different sets of SPCR configurations for the UE, so that negotiation between the MN and the SN is unnecessary. If the corresponding condition in any one or more SPCR configurations is satisfied, the UE determines that successful PSCell change information of this PSCell change procedure is recorded in the UE variable corresponding to the SPCR. In the second and third implementations, the UE is configured with only one set of SPCR configuration. So, when both the MN and the SN have the need to configure the SPCR, the MN and the SN need to negotiate the SPCR configuration.

Preferably, the SPCR information (i.e., the successful PSCell change information) includes information of a PSCell change procedure, such as source PSCell information (e.g., a source PSCell identity and a source PSCell measurement), target PSCell information (e.g., a target PSCell identity and a target PSCell measurement), a neighboring cell measurement result, a triggering cause of the SPCR, associated PCell information (e.g., a PCell identity and a PCell measurement), and indication information indicating whether a triggering condition corresponding to the triggering cause/ the SPCR configuration is configured by the MN or the SN. The SPCR information recorded by the UE in the UE variable corresponding to the SPCR is not limited in the present disclosure, and merely serves as an example here.

### Embodiment 2

Provided in the embodiment is an SPCR configuration management method performed on UE. In the method described in the embodiment, upon successful completion of a PSCell change procedure, a UE can determine, on the basis of the PSCell change scenario, whether an SPCR configuration thereon needs to be released, thereby avoiding reconfiguration signaling overhead caused by unnecessary release of the SPCR configuration.

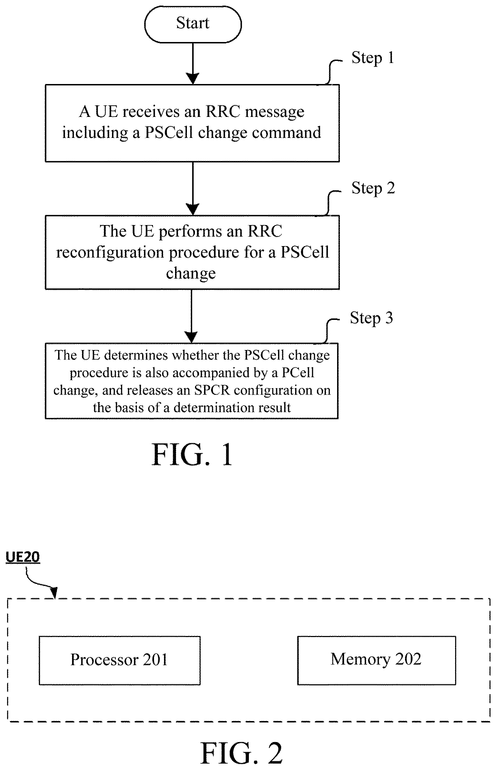

FIG. 1 is a flowchart showing a method (i.e., the SPCR configuration management method) performed by user equipment (UE) according to Embodiment 2. As shown in FIG. 1, the method performed by user equipment (UE) in this embodiment may typically include the following steps.

In step 1, a UE receives an RRC message (e.g., an RRC reconfiguration message including a reconfiguration with sync information element for an SCG) including a PSCell change command. Preferably, the RRC message is received via SRB1.

In step 2, the UE performs an RRC reconfiguration procedure for a PSCell change. In this procedure, the UE performs an SPCR determination operation. Preferably, the UE performs the SPCR determination operation when the UE determines that the PSCell change is successfully completed. The PSCell change being successfully completed may mean that a random access procedure triggered by the reconfiguration with sync for an SCG is successfully completed. In this step, the UE performing the SPCR determination operation further includes the UE determining that the UE is configured with an SPCR configuration. Therefore, it is obvious that in step 1 or before step 1, the method further includes: the UE receiving an RRC message including the SPCR configuration.

In step 3, the UE determines whether the PSCell change procedure is also accompanied by a PCell change (handover), and releases an SPCR configuration on the basis of a determination result. If so, an SPCR configuration including an SPCR configuration configured by an MN and an SPCR configuration configured by an SN is released. If not, only the SPCR configuration configured by the SN is released. Whether the PSCell change procedure is accompanied by the PCell change may be expressed as whether the RRC message (the RRC reconfiguration message) including the reconfiguration with sync information element for an SCG in step 1 also includes a reconfiguration with sync information element for an MCG. If so, that is, if the RRC message including the reconfiguration with sync information element for an SCG also includes the reconfiguration with sync information element for an MCG, then the UE releases the SPCR configuration including the SPCR configuration configured by the MN and the SPCR configuration configured by the SN. If not, that is, if the RRC message including the reconfiguration with sync information element for an SCG does not include the reconfiguration with sync information element for an MCG, then the UE releases only the SPCR configuration configured by the SN.

Preferably, considering that the RRC message may be nested (that is, an inner RRC message is included or nested in an outer RRC message), the above RRC message including the reconfiguration with sync information element for an SCG refers to an outermost RRC message. Preferably, in this case, the reconfiguration with sync information element for an SCG may be included in an inner RRC reconfiguration message included in an mrdc-SecondaryCellGroup information element.

Preferably, the determination performed by the UE in step 3 is performed when the UE determines that the UE is configured with the SPCR configuration configured by the MN.

Preferably, the SPCR configuration management method described in this embodiment is used for the first SPCR configuration implementation in Embodiment 1. That is, the SPCR configuration management method in the present embodiment can be performed when the system supports the MN and the SN in respectively configuring two sets of SPCR configurations for the UE. In this case, the SPCR configuration configured by the MN and the SPCR configuration configured by the SN in step 3 correspond to the SPCR configuration determined and configured by the MN and the SPCR configuration determined and configured by the SN in the first SPCR configuration implementation in Embodiment 1.

### Embodiment 3

In this example, user equipment (UE) according to the present disclosure is described. FIG. 2 is a block diagram showing user equipment (UE) according to the present disclosure. As shown in FIG. 2, user equipment (UE) 20 includes a processor 201 and a memory 202. The processor 201 may include, for example, a microprocessor, a microcontroller, an embedded processor, and the like. The memory 202 may include, for example, a volatile memory (such as a random access memory (RAM)), a hard disk drive (HDD), a non-volatile memory (such as a flash memory), or other memories. etc. The memory 202 has program instructions stored thereon. When run by the processor 201, the instructions can perform the above information reporting method described in detail in the present invention.

The method and related equipment according to the present disclosure have been described above in conjunction with preferred embodiments. It should be understood by those skilled in the art that the methods shown above are only exemplary. The method according to the present disclosure is not limited to steps or sequences shown above. The base station and user equipment shown above may include more modules. For example, the base station and user equipment may further include modules that may be developed or will be developed in the future to be applied to a base station, an MME, or UE. Various identifiers shown above are only exemplary, not for limitation, and the present disclosure is not limited to specific information elements serving as examples of these identifiers. A person skilled in the art could make various alterations and modifications according to the teachings of the illustrated embodiments.

The program running on the device according to the present disclosure may be a program that enables a computer to implement the functions of the embodiments of the present disclosure by controlling a central processing unit (CPU). The program or information processed by the program may be temporarily stored in a volatile memory (for example, a random access memory (RAM)), a hard disk drive (HDD), a non-volatile memory (for example, a flash memory), or other memory systems.

The program for implementing the functions of the embodiments of the present disclosure may be recorded on a computer-readable recording medium. The corresponding functions may be achieved by reading programs recorded on the recording medium and executing the programs by a computer system. The phrase "computer system" herein may be a computer system embedded in the device, which may include operating systems or hardware (e.g., peripherals). The phrase "computer-readable recording medium" may refer to a semiconductor recording medium, an optical recording medium, a magnetic recording medium, a recording medium for programs that are dynamically stored for a short time, or any other recording medium readable by a computer.

Various features or functional modules of the device used in the above embodiments may be implemented or executed by circuits (for example, monolithic or multi-chip integrated circuits). Circuits designed to execute the functions described in this description may include general-purpose processors, digital signal processors (DSPs), application-specific integrated circuits (ASICs), field-programmable gate arrays (FPGAs) or other programmable logic devices, discrete gates or transistor logic, or discrete hardware components, or any combination of the above. The general-purpose processor may be a microprocessor, or may be any existing processor, controller, microcontroller, or state machine. The circuit may be a digital circuit or an analog circuit. When new integrated circuit technologies that replace existing integrated circuits emerge because of the advances in semiconductor technology, one or a plurality of embodiments of the present disclosure may also be implemented using these new integrated circuit technologies.

Furthermore, the present disclosure is not limited to the embodiments described above. Although various examples of the described embodiments have been described, the present disclosure is not limited thereto. Fixed or non-mobile electronic devices installed indoors or outdoors, such as AV equipment, kitchen equipment, cleaning equipment, air conditioners, office equipment, vending machines, and other household appliances, may be used as terminal devices or communications devices.

The embodiments of the present disclosure have been described in detail above with reference to the accompanying drawings. However, the specific structures are not limited to the above embodiments. The present disclosure also includes any design modifications that do not depart from the substance of the present disclosure. In addition, various modifications may be made to the present disclosure within the scope of the claims. Embodiments resulted from the appropriate combinations of the technical means disclosed in different embodiments are also included within the technical scope of the present disclosure. In addition, components with the same effect described in the above embodiments may be replaced with one another.

## Claims

1. A method performed by user equipment (UE), comprising:
the UE receiving a radio resource control (RRC) message comprising a primary secondary cell group cell (PSCell) change command;
the UE performing an RRC reconfiguration procedure for a PSCell change, and performing a PSCell change report (SPCR) determination operation; and
the UE determining whether the PSCell change procedure is accompanied by a primary cell (PCell) change, and releasing an SPCR configuration on the basis of a determination result.

2. The method performed by user equipment (UE) according to claim 1, wherein
the SPCR configuration comprises: a first SPCR configuration configured by a master node (MN) and a second SPCR configuration configured by a secondary node (SN).

3. The method performed by user equipment (UE) according to claim 2, wherein
if the UE determines that the PSCell change procedure is accompanied by a PCell change, the first SPCR configuration and the second SPCR configuration are released, and
if the UE determines that the PSCell change procedure is not accompanied by a PCell change, the second SPCR configuration is released.

4. The method performed by user equipment (UE) according to claim 2, wherein
the RRC message is received via SRB1,
the UE receives the first SPCR configuration from an otherconfig information element or a secondaryCellGroup information element in the RRC message on SRB1, and
the UE receives the second SPCR configuration from an mrdc-SecondaryCellGroupConfig information element in the RRC message on SRB1.

5. The method performed by user equipment (UE) according to claim 1, wherein
upon determining that the PSCell change is successfully completed, the UE performs the SPCR determination operation.

6. The method performed by user equipment (UE) according to claim 3, wherein
if the RRC message comprising a reconfiguration with sync information element for an SCG also comprises a reconfiguration with sync information element for an MCG, the UE determines that the PSCell change procedure is accompanied by a PCell change.

7. The method performed by user equipment (UE) according to claim 6, wherein
if the RRC message comprises an inner RRC message and an outer RRC message, the part of the RRC message for the reconfiguration with sync information element for an SCG is the outer RRC message.

8. A user equipment, comprising:
a processor; and
a memory, the memory having instructions stored thereon, wherein
the instructions, when run by the processor, cause the user equipment to perform the method according to any one of claims 1-7.

9. An information reporting method, comprising:
a master node (MN) or a secondary node (SN) transmitting a PSCell change report (SPCR) configuration to user equipment (UE) in dual connectivity;
if the MN is to transmit the SPCR configuration to the UE, the SN including an SPCR configuration proposal in an inter-node RRC message and transmitting the same to the MN, and the MN determining the SPCR configuration on the basis of the SPCR configuration proposal of the SN in combination with an SPCR configuration requirement of the MN; and
if the SN is to transmit the SPCR configuration to the UE, the MN including an SPCR configuration proposal in an inter-node RRC message and transmitting the same to the SN, and the SN determining the SPCR configuration on the basis of the SPCR configuration proposal of the MN in combination with an SPCR configuration requirement of the SN.
